Europäisches Patentamt

European Patent Office

Office européen des brevets

(11) Veröffentlichungsnummer: **0 220 434**
**A2**

(12) **EUROPÄISCHE PATENTANMELDUNG**

(21) Anmeldenummer: **86112334.7**

(22) Anmeldetag: **05.09.86**

(51) Int. Cl.4: **F01N 3/02**

(30) Priorität: **26.10.85 DE 3538105**

(43) Veröffentlichungstag der Anmeldung:
**06.05.87 Patentblatt 87/19**

(84) Benannte Vertragsstaaten:
**AT DE FR GB IT NL SE**

(71) Anmelder: **M A N Technologie GmbH**
**Dachauer Strasse 667**
**D-8000 München 50(DE)**

(72) Erfinder: **Wenner, Ulrich**
**Immenweg 26**
**D-3110 Uelzen 1(DE)**
Erfinder: **Muser, Dieter**
**Dresdner Strasse 90**
**D-8000 München 50(DE)**

(54) **Filter für den Abgasstrom einer Brennkraftmaschine.**

(57) Um das Filterwirkvolumen eines aus Fasern gewickelten Fiterelementes (16) nicht durch ein Stützelement zu beeinträchtigen, wird das Stützelement aus dünnen Drähten (15), Stäben oder Blechkanten hergestellt, die mittels Trägern (13, 14), die im allgemeinen sternförmig ausgebildet sein werden, miteinander verbunden sind. Die Fasern sind um die Anordnung der Drähte, Stäbe oder Blechkanten gewickelt.

# Fig.1

## Filter für den Abgasstrom einer Brennkraftmaschine

Die Erfindung bezieht sich auf einen Filter für Abgase einer Verbrennungsmaschine, bestehend aus einem Stützelement, auf das als Filtermaterial dienende Fasern gewickelt sind.

Aus der DE-PS 30 07 642 ist ein Filter dieser Art bekannt, bei dem Fasern aus Siliziumdioxid auf ein mit Durchgangsöffnungen versehenem Stützrohr aufgewickelt sind. Im Betrieb des Filters strömen die Abgase in radialer Richtung in das Filterrohr ein und verlassen es in axialer Richtung. Die im Abgas enthaltenen Partikel werden dabei im Wickelkörper festgehalten. Es hat sich jedoch eine unregelmäßige Ablagerung der Partikel im Wickelmaterial und damit eine Beeinträchtigung des Abscheidegrades des Filters gezeigt.

Der Erfindung liegt die Aufgabe zugrunde, einen Filter der eingangs genannten Art dahingehend zu verbessern, daß die dem Filtermaterial eigene Filterwirkung möglichst voll genutzt werden kann.

Die Aufgabe ist erfindungsgemäß durch die im Anspruch 1 gekennzeichneten Merkmale gelöst.

Durch die Verwendung eines aus dünnen Stäben bestehenden Stützelementes konnte eine weitgehend homogene Verteilung von zurückgehaltenen Partikeln bzw. Rußpartikeln im Faserfilterteil beobachtet werden, so daß das Filtervolumen des Filtermaterials bis auf vernachlässigbare Linienbereiche voll genutzt wird.

Der Erfindung liegt die Erkenntnis zugrunde, daß bei dem bekannten Stützrohr mit Durchgangsöffnungen der Abgasstrom innerhalb des Filtermaterials in viele Einzelströme aufgeteilt wird, die mit einer derartigen Geschwindigkeit durchziehen, daß eine Adhäsion der Partikel nicht in zufriedenem Maße stattfinden kann. Dagegen erfolgt in dem Filterelement vor den Wandungsbereichen des Stützrohres eine verstärkte Ablagerung der Partikel. Das hat zur Folge, daß die effektive Filterwirkfläche sich auf die Bereiche beschränkt, die der Wandungsfläche des Stützrohres entsprechen. Sie steht daher nicht im Verhältnis des Gesamtvolumens des Fiterelementes. Dieser Effekt wurde ebenfalls bei Stützrohren mit relativ großen Durchgangsöffnungen beobachtet.

Mit der erfindungsgemäßen Lösung beschränken sich die den Abgasstrom beeinträchtigenden Bereiche auf wenige, schmale Linienbereiche, so daß im Ergebnis die Filterwirkung sich nahezu auf das gesamte Filterelement erstreckt.

Bereits drei Stäbe reichen aus, um den Wickelkörper wirksam zu stützen. Bei großvolumigen Filtern, oder wenn zur Vergrößerung der Filterfläche ein annähernd runder Querschnitt gewünscht wird, werden im allgemeinen mehr als drei Stäbe verwendet, wobei durch deren geringen Breite deren Widerstandsfläche gegenüber der Filtergröße kaum ins Gewicht fallen.

Unter Stäben werden sowohl Drähte als auch Metallstäbe und Kanten von Platten verstanden. Die Ausführung dieser Stäbe bzw. deren Verbindung miteinander oder mit Gehäuseteilen des Filters können jede beliebige Form annehmen, wichtig ist nur, daß der Abgasstrom beim Durchqueren des Wickelfilters auf nur eine geringstmögliche Widerstandsfläche trifft und das nur auf vereinzelten Stellen.

Die Stäbe können vorzugsweise gespannte Drähte sein. Bei diesem einfachen Konzept können die Drähte entweder am Filtergehäuse mit ihren Enden befestigt oder an einem zentrischen Gestell angeschweißt sein.

Gemäß einer weiteren Ausgestaltung der Erfindung bestehen die Stäbe aus selbsttragenden Stäben, die im Abstand voneinander und parallel zueinander angeordnet und mittels Querträgern miteinander verbunden sind. Es können dafür zwei oder drei sternförmige Träger verwendet werden.

Es ist auch möglich, die freien Kanten von sternförmig angeordneten Platten als Stäbe zu verwenden. Mit V-förmige gebogenen Platten läßt sich ein derartiges Stützelement herstellen, indem die Winkelkanten der V-förmigen Platten alle miteinander verschweißt bzw. verbunden werden. Damit entsteht ein Gebilde mit sternförmigem Querschnitt, bei dem das Abgas in mehrere Kanäle aufgetrennt wird, jedoch ohne den Durchströmquerschnitt nennenswert zu verringern und einen Einfluß auf die Ablagerung der Partikel im Filter zu haben. Hierzu können vorzugsweise Lochblechplatten verwendet werden.

In der Zeichnung sind Ausführungsbeispiele der Erfindung schematisch dargestellt.

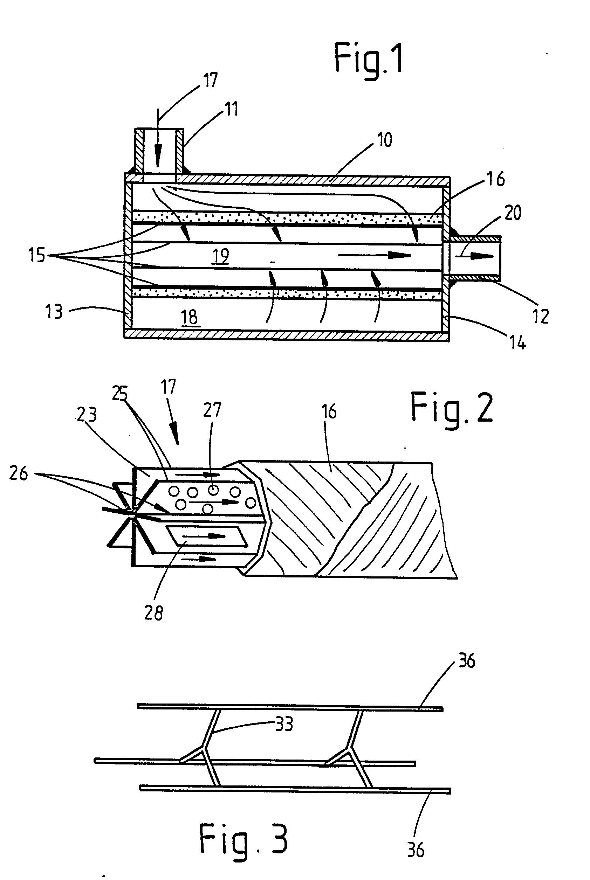

Fig. 1 -3 zeigen je ein Ausführungsbeispiel.

In Fig. 1 ist ein Filtergehäuse 10 mit einem Abgas-Einlaßstutzen 11 und einem Abgas-Auslaßstutzen 12 dargestellt. An den Gehäusestirnwänden 13 und 14 sind Drähte 15 in regelmäßigen Abständen im Kreisquerschnitt gespannt. Die Drähte 15 bilden ein Stützelement für ein Filtermaterial 16, das aus um die Drähte 15 gewickelten Fasern aus einem Keramikmaterial, z.B. $Al_2O_3$, $SiO_2$ besteht.

Das Abgas 17 tritt über den Einlaßstutzen 11 in den äußeren Ringraum 18 des Filtergehäuses ein, von wo aus es durch das Filtermaterial 16 hindurch in den zentrischen Raum 19 und von dort über den Auslaßstutzen 12 als gereinigtes Abgas 20 hinausströmt.

Aufgrund der dünnen Drähte 15 des Trägerelementes kann das Abgas 17 nahezu frei durch das Filtermaterial 16 hindurchströmen, ohne daß das aus dünnen Drähten 15 bestehende Stützelement eine Querschnittsminderung des Strömungsweges durch das Filtermaterial 16 verursacht. Die Filterkapazität des Filtermaterials 16 bleibt somit voll erhalten.

Die gleiche Wirkung, wie mit aus Drähten 15 bestehendem Stützelement, können mit Platten, z.B. Metallplatten oder Lochblechen 23 erreicht werden, die so angeordnet sind, daß das Filterelement 16 lediglich auf den Kanten 25 der Bleche 23 ruht. In der einfachsten Form werden diese mit Löchern 27, 28 versehene Bleche 23 mit ihren zweiten Kanten miteinander verbunden, so daß sie im Querschnitt einen Stern bilden. Leichter herzustellen ist das aus Blechen 23 bestehende Stützelement, wenn jeweils zwei benachbarte Blechflügel ein V-förmig gebogenes Blech sind, die entlang ihrer Winkelkante 26 miteinander verbunden, verschweißt werden. Diese Ausführung bietet eine stabile Stütze für das Filterrohr, was besonders bei in Fahrzeugen eingesetzten Filtern erforderlich ist, um den Erschütterungen des Fahrzeugs standhalten zu können.

Fig. 3 zeigt eine Ausführung mit selbsttragenden Stäben 36, die mittels fertigungstechnisch einfachen, zentralen Trägern 33 miteinander verbunden sind, die sternförmig ausgebildet sind.

Bei derartigen Filterausführungen ist auch eine Umkehr der Abgasströmungsrichtung möglich. Auch hier beeinträchtigen die Stäbe nicht den Abscheidegrad. Bei der Ausführung gemäß Fig. 2 wird der Gasstrom zwar in mehrere Ströme 28 aufgeteilt, jedoch findet diese nicht im Filtermaterial 16, sondern danach oder bei umgekehrter Strömungsrichtung davor statt, wo sie keinen Einfluß auf die Filterwirkung hat.

## Ansprüche

1. Filter für Abgase einer Verbrennungsmaschine, bestehend aus einem Stützelement, auf das als Filtermaterial dienende Fasern gewickelt sind, dadurch gekennzeichnet, daß das Stützelement aus miteinander verbundenen Stäben (15, 25, 36) besteht, auf die die Fasern (16) gewickelt sind.

2. Filter nach Anspruch 1, dadurch gekennzeichnet, daß die Stäbe Drähte (15) sind.

3. Filter nach Anpruch 1, dadurch gekennzeichnet, daß die Stäbe Kanten (25) von Platten (23) sind.

4. Filter nach Anspruch 1, dadurch gekennzeichnet, daß die Stäbe (15, 25, 36) in beliebigen oder gleichen Abständen im Mantelbereich eines idealen Zylinders angeordnet sind.

5. Filter nach einem der vorhergehenden Ansprüche, dadurch gekennzeichnet, daß die Stäbe (36, 25) mittels Querträgern (33) oder -platten (23), die vorzugsweise sternförmig angeordnet sind, miteinander verbunden sind.

6. Filter nach Anspruch 1, dadurch gekennzeichnet, daß das Stützelement aus mehreren V-förmig gebogenen Platten (23) besteht, die entlang deren Winkelkanten (26) miteinander verbunden sind.

Fig.1

Fig.2

Fig. 3